# EUROPEAN PATENT APPLICATION

(11) **EP 1 217 546 A2**
(43) Date of publication of application: **26.06.2002**
(21) Application number: 01122998.6
(22) Date of filing: 26.09.2001
(51) Int. Cl.: G06F 17/30

(54) **Access device for executing access to information depending on customer, method and recording medium**

(30) Priority: 19.12.2000 JP 2000385882
(71) Applicant: Kitamura, Koso, Ise-shi, Mie (JP)
(72) Inventor: Kitamura, Koso, Ise-shi, Mie (JP)
(74) Representative: Lorenz, Werner, Dr.-Ing.

(57) **Abstract**

It is object to provide an access device for executing access to information depending on a customer and for making it possible to facilitate access to respective kind of sites such as portal site and so forth that are adapted to the taste of the user.

User information access unit 14 receives terminal identification information (telephone number) transmitted from information terminal 10 (cellular phone), and allows the information terminal 10 to be accessed to portal sites 20a, 20b corresponding to the terminal identification information (telephone number) on the basis of storage contents of correspondence storage section 16. Accordingly, if there is the telephone number of the information terminal 10, user ID and so forth of the user is not required for the access. Consequently, the access to the portal sites 20a, 20b becomes easy. Moreover, the portal sites 20a, 20b store therein information depending on the telephone number of the information terminal 10, namely depending on the user of the information terminal 10 (usually, one user per one cellular phone). Accordingly, the user of the information terminal 10 is capable of accessing to sites 22a, 22b and so forth matched to the own taste.

## Description

### Background of Invention

### 1. Field of Invention

The present invention relates to a device and a method in which access to a portal site is executed easily.

### 2. Description of the related Art

In recent years, to peruse a homepage through an internet is executed widely. In perusing the homepage, http (hyper text transfer protocol) is used. If URL (universal resource locator) of the http server is made to specify by use of web browser such as Internet Explorer (trade name), the http server indicates the homepage on the web browser. The URL, for instance, is combination of alphanumeric characters such as http://www.jpo-miti.go.jp. Designation of URL is capable of being executed in such a way as to type to predetermined column of the web browser.

### Summary of Invention

However, to typewrite spellings of the URL itself is laborious work, further, to remember accurately the spellings of the URL is also laborious. For that reason, in many cases, link is made to extend from the homepage to another homepage. A reader of the homepage is capable of perusing another homepage in such a way as to click the link by a mouse and so forth. Here, it is assumed that the link is extend to many homepages B, C, ···, from certain homepage A. Just then, if the homepage A is only indicated, another many homepages B, C and so forth are capable of being perused in such a way as only to click the link. In this case, since it is unnecessary to remember the URL of the homepages B, C, and so forth and to typewrite the URL of the homepages B, C, and so forth, it is convenient. Thus, the http server for indicating the homepage A from which links are extended to another many homepages is called as a portal site.

In order to indicate the homepage of the portal site, information terminal such as a personal computer, a cellular phone and so forth is made to start and to connect to the internet to access to the portal site. On the occasion of start of the information terminal and connection to the internet, the user typewrites the user ID and password depending on necessity. On the occasion of the access of the portal site, the URL of the portal site is made to typewrite.

However, on the occasion that access is made to execute to the portal site, it is necessary to execute the works such as (1) input of the user ID, (2) to typewrite of the URL to the portal site, accordingly, the access to the portal site is laborious.

Further, when the portal site itself is existing one, a case may be made to occur about the link which is not extended to the homepage that is one which he or she desires to peruse.

Moreover, such one also occurs except for the portal site, for instance the same problems occur on the site that adaptation of the user taste is desired. Namely, this problem is that the access to the site is difficult, furthermore, there is the case that the site is not adapted to the user taste.

Now, it is an object of the present invention to provide an access device and so forth for executing access to information depending on a customer, and for making it possible to access easily to various kinds of sites such as portal site and so forth adapted to the user's taste.

Moreover, the various kinds of sites described here are, for instance, the site that permits to provide information for individual user and the site that permits dispatch of information service and so forth for individuals.

According to the present invention as described in claim 1, an access device for executing access to information depending on a customer includes: an information terminal which has inherent terminal identification information and which executes transmission of the terminal identification information; a customer's information storage unit which stores therein information depending on the customer of the information terminal; a correspondence storage unit for storing correspondence between the terminal identification information and the customer's information storage unit; and a customer's information access unit which receive the terminal identification information transmitted from the information terminal, and which allows the information terminal to be accessed to the customer's information storage unit corresponding to the terminal identification information on the basis of storage contents of the correspondence storage unit.

According to the access device for executing access to information depending on the customer constituted as described above, the customer's information access unit receive the terminal identification information transmitted from the information terminal, and allow the information terminal to be accessed to the customer's information storage unit corresponding to the terminal identification information on the basis of the storage contents of the correspondence storage unit.

Accordingly, if there is inherent terminal identification information that the information terminal has, information inherent to the customer such as the user ID of the customer or the password is not required for the access to the customer's information storage unit. Consequently, the access to the customer's information storage unit becomes easy.

Furthermore, the customer's information storage unit store therein information depending on the customer of the information terminal. Accordingly, the customer of the information terminal is capable of accessing sites and so forth matched to the own taste. Also, the sites matched to the own taste preferably store therein information for user individual, in this case, it is possible to dispatch of information for the user individual effectively. Moreover, the information depending on the customer described here also includes, except for information depending on the customer individual, information of group to which the customer belongs and information depending on common attribute of the customer.

According to the present invention as described in claim 2, an access device for executing access to information depending on a customer, in which the access device has inherent terminal identification information and allows an information terminal for executing transmission of the terminal identification information to be accessed to a customer's information storage unit which store therein information depending on the customer concerned with the information terminal, includes: a correspondence storage unit for storing correspondence between the terminal identification information and the customer's information storage unit; and a customer's information access unit which receive the terminal identification information transmitted from the information terminal, and which allow the information terminal to be accessed to the customer's information storage unit corresponding to the terminal identification information on the basis of storage contents of the correspondence storage unit.

The present invention as described in claim 3, is the access device for executing access to information depending on the customer according to claim 1 or claim 2, wherein the customer's information storage unit store therein information depending on the information terminal.

The information depending on the information terminal described here includes information of the information terminal itself and information depending on common attribute to the information terminal itself.

The present invention as described in claim 4, is the access device for executing access to information depending on the customer described in any one of claim 1 to claim 3, wherein the customer's information storage unit store therein data for accessing device that indicates information.

The device for indicating information described here indicates, for instance, the portal site and so forth.

The present invention as described in claim 5, is the access device for executing access to information depending on the customer described in any one of claim 1 to claim 3, wherein there is provided customer's information transmission unit for transmitting information corresponding to the customer or information depending on the information terminal to the customer's information storage unit.

The information corresponding to the customer is, for instance, a notice of telephone charge of the customer.

The present invention as described in claim 6, is the access device for executing access to information depending on the customer described in any one of claim 1 to claim 5, wherein an access method for accessing to the customer's information access unit is laid open.

For instance, this case is one in which the URL of the customer's information access unit is laid open, or it is registered to the search engine.

The present invention as described in claim 7, is the access device for executing access to information depending on the customer described in any one of claim 1 to claim 5, wherein the customer's information access unit accept only access from the specified information terminal.

The present invention as described in claim 8, is the access device for executing access to information depending on the customer described in any one of claim 1 to claim 7, wherein the customer's information storage unit exist temporarily.

This is, so to speak, one in which the customer's information storage unit is made to produce dynamically.

The present invention as described in claim 9, is the access device for executing access to information depending on the customer described in any one of claim 1 to claim 8, wherein the information terminal transmits the terminal identification information to the customer's information access unit after predetermined operations.

According to the present invention as described in claim 10, an access method for executing access to information depending on a customer and for allowing an information terminal, which has inherent terminal identification information and which executes transmission of the terminal identification information, to be accessed to a customer's information storage unit which stores therein information depending on the customer of the information terminal includes: a correspondence storage step for storing correspondence between the terminal identification information and the customer's information storage unit; and a customer's information access step which receive the terminal identification information transmitted from the information terminal, and which allows the information terminal to be accessed to the customer's information storage unit corresponding to the terminal identification information on the basis of storage contents of the correspondence storage step.

According to the present invention as described in claim 11, a computer-readable medium having a program of instructions for execution by the computer to perform an access process for executing access to information depending on a customer and for allowing an information terminal, which has inherent terminal identification information and which executes transmission of the terminal identification information, to be accessed to a customer's information storage unit which stores therein information depending on the customer of the information terminal includes: a correspondence storage processing for storing correspondence between the terminal identification information and the customer's information storage unit; and a customer's information access processing which receive the terminal identification information transmitted from the information terminal, and which allows the information terminal to be accessed to the customer's information storage unit corresponding to the terminal identification information on the basis of storage contents of the correspondence storage processing.

### Brief Description of the Drawings

Figure 1 is a block diagram illustrating a configuration of an access device for executing access to information depending on customer according to a first embodiment of the present invention;
Figure 2 is a view illustrating one example of storage content of correspondence storage section 16;
Figure 3 is a flowchart illustrating operation of the first embodiment;
Figure 4 is a block diagram illustrating a configuration of an access device for executing access to information depending on customer according to a second embodiment of the present invention;
Figure 5 is a flowchart illustrating operation of the second embodiment;
Figure 6 is a block diagram illustrating a configuration of an access device for executing access to information depending on customer according to a third embodiment of the present invention;
Figure 7 is a view illustrating one example of storage content of correspondence storage section 33; and
Figure 8 is a flowchart illustrating operation of the third embodiment.

### Description of the preferred Embodiments

The embodiments of the present invention will be described in detail below using accompanying drawings.

### First Embodiment

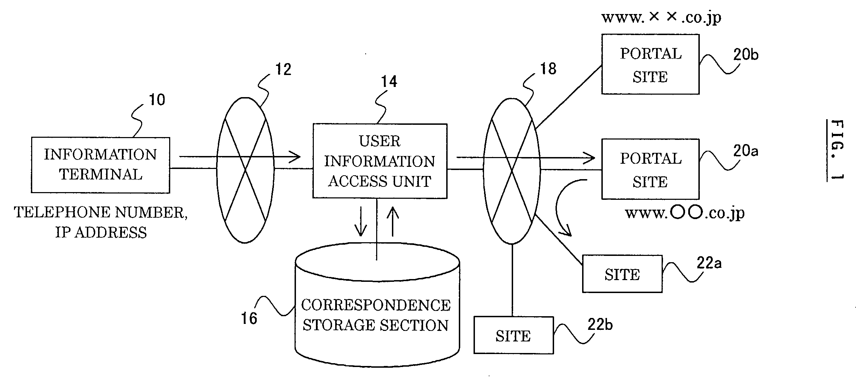

FIG. 1 illustrates a configuration of an access device for executing access to information depending on the customer according to the first embodiment of the present invention.

The access device for executing access to information depending on the customer according to the first embodiment is provided with an information terminal 10, a first communication network 12, a user information access unit 14, a correspondence storage section 16, a second communication network 18, portal sites 20a, 20b, and sites 22a, 22b.

The information terminal 10 has an inherent terminal identification information, and transmits the terminal identification information to the user information access unit 14 through the first communication network 12. It is also good that the terminal identification information may be made to transmit after the user executes predetermined operation to the information terminal 10. For instance, it is assumed that the information terminal 10 executes the access to the user information access unit 14 or the homepage of the site that is not illustrated. At this time, the user information access unit 14 or the homepage of the site that is not illustrated indicates message for stimulating transmission of the terminal identification information, and indicates together button for selecting whether transmission is made to execute. At this time, the terminal identification information may be made to transmit when the user clicks the button for only executing transmission.

The information terminal 10 is, for example, a cellular phone, a personal computer connectable to the internet, a work station and so forth. One example of the terminal identification information inherent to the information terminal 10 is the telephone number if the information terminal 10 is the cellular phone, and if the information terminal 10 is the personal computer, the terminal identification information inherent to the information terminal 10 is MAC address, IP address, and so forth. Namely, the terminal identification information may be one from which information terminal 10 is capable of being identified. Moreover, the information terminal 10, on the facility of illustration, only one is illustrated in FIG. 1, however, in general, a plurality of information terminals are provided.

The first communication network 12 is a communication network for connecting the information terminal 10 to the user information access unit 14. If the information terminal 10 is the cellular phone, such communication network is a packet communication network. If the information terminal 10 is the personal computer and so forth, such communication network is the internet and so forth.

The user information access unit 14 receives the terminal identification information transmitted from the information terminal 10. Further, the user information access unit 14 allows the information terminal 10 to be accessed to the portal sites 20a, 20b corresponding to the terminal identification information on the basis of the storage contents of the correspondence storage section 16. The user information access unit 14 is the personal computer and so forth connectable to the internet. Furthermore, hereinafter, examples that mainly use http (hyper text transfer protocol) are described, however, of course, it is also possible to use another protocol such as ftp (file transfer protocol) except for the http.

If the information terminal 10 executes the access to the portal sites 20a, 20b, it is possible to peruse the storage contents of the portal sites 20a, 20b. Such function is capable of being realized in such a way that the portal sites 20a, 20b are taken to be the http server, and the information terminal 10 is taken to be the http client. Furthermore, it enables jump of the storage content to be executed from the portal sites 20a, 20b to the sites 22a, 22b while using the perusal screen. Such function is capable of being executed in such a way as to extend the link from the portal sites 20a, 20b to the sites 22a, 22b.

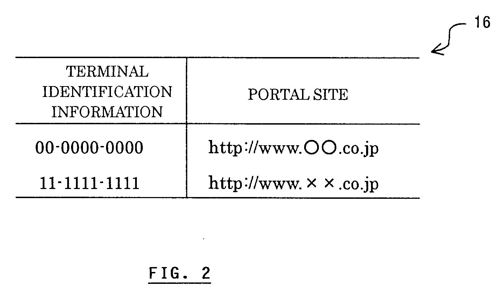

The correspondence storage section 16 stores therein correspondence between the terminal identification information and the portal sites 20a, 20b. FIG. 2 illustrates one example of the storage contents of the correspondence storage section 16. For instance, in the correspondence storage section 16, the telephone number is stored as the terminal identification information of the information terminal 10, and the URL (Universal Resource Locator) is stored as one that indicates the portal sites 20a, 20b. For instance, the portal site 20a having the URL of http://www.○○.co.jp corresponds to the information terminal 10 whose telephone number is 00-0000-0000. Moreover, the URL and so forth of the portal sites 20a, 20b corresponding to the terminal identification information are registered before the user (customer) utilizes the portal site.

The second communication network 18 is a communication network for connecting mutually the user information access unit 14, the portal sites 20a, 20b, and the sites 22a, 22b. The second communication network 18 is, for instance, the internet.

The portal sites 20a, 20b store therein data for accessing to the sites 22a, 22b. For instance, the portal sites 20a, 20b store therein the URL of the sites 22a, 22b. Furthermore, respective individuals have respective preferable sites to which the access is made to execute. Accordingly, the storage contents of the portal sites 20a, 20b are changed depending on the customers of the information terminal 10. For that reason, it is also good to prepare the storage contents of the portal sites 20a, 20b by the customer. However, it is not asked whether the storage contents of the portal sites 20a, 20b are made to prepare by which person.

For instance, the portal site 20a stores therein data for accessing to the sites 22a, 22b namely stores therein the URL of the sites 22a, 22b, while the portal site 20b stores therein data for accessing to only the site 20a, namely, stores therein the URL of the site 22a. Thus, if the storage contents of the respective portal sites are made to differ from each other, since respective information terminal correspond to the respective portal sites, the storage content of the portal site is different from each other in every respective information terminals. Moreover, in recent years, in many cases, the user of the information terminal 10 corresponds to one person per one communication terminal (particularly, cellular phone), if the storage contents of the portal site are different in every communication terminal 10, the storage contents of the portal site are different in every respective users. Namely, the storage contents of the portal site are capable of being customized in every respective users. Moreover, it is also good that the storage contents of the portal site may be made to customize depending on group to which the user belongs or common attribute of the user instead of customizing of the storage contents of the portal site in every respective users. For instance, it can be considered that the portal site to which data for accessing the site that reports information concerning Tokyo is made to correspond to the user of the information terminal 10 who lives in Tokyo. Further, it is also good that the storage contents of the portal site may be made to customize depending on the information terminal 10 itself or common attribute of the information terminal 10 itself instead of customizing of the storage contents of the portal site in every respective users. For instance, it can be considered that the portal site in which the data for accessing the site that describes information concerned with P206 type is stored is made to correspond to certain kind of cellular phone (P206 type and so forth) from among the information terminals 10.

Accordingly, the portal sites 20a, 20b correspond to customer's information storage means into which information depending on the customer of the information terminal is stored. Furthermore, it is also good that the site which reports corresponding information (telephone charge of the user, information of locality where the user lives and so forth) in every respective users, in every respective groups to which the user belongs, or in every common attribute to the user, instead of the portal site 20a. Moreover, the portal site is illustrated only two in FIG. 1 on facility of illustration, however, it can be considered that there are actually more than three. Also, it is no problem that the portal site is already provided, however, it is also good that the portal sites 20a, 20b may be made to provide temporarily only during the time that the user executes access, namely, the portal sites 20a, 20b may be made to provide dynamically. For instance, the file that reports data for accessing to the site temporarily is made to prepare only during the time that the user executes access, and the file is made to eliminate after completion of the access. If the portal sites 20a, 20b are made to provide dynamically, it is possible to prevent damage that another person looks at the storage contents of the portal sites 20a, 20b. Further, if the portal sites 20a, 20b are made to provide dynamically, even though the URL and the file name of the portal sites are taken to be the complete common URL and the file name in every respective users (portal site becomes one), it also enables the storage contents to be one corresponding to each user.

The sites 22a, 22b are the personal computer and so forth for indicating the homepage. The information indicated by the sites 22a, 22b is the information concerned with movie or music and the information concerned with work of the customer of the information terminal 10. Furthermore, the site is illustrated only two in FIG. 1 on the facility of illustration, however, it can be enough considered that there are more than three sites.

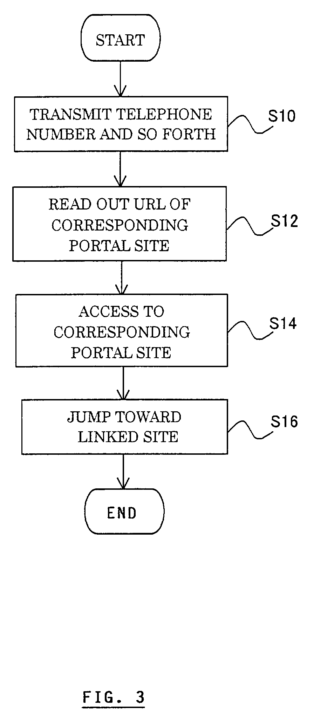

Next, operation of the first embodiment will be described referring to flowchart of FIG. 3. Firstly, the information terminal 10 transmits the telephone number and so forth (S10). The telephone number and so forth that are inherent terminal identification information to the information terminal 10 are sent to the user information access unit 14 through the first communication net work 12. The user information access unit 14 reads out the URL of the portal sites 20a, 20b corresponding to the telephone number from the correspondence storage section 16 (S12). If the telephone number is 00-0000-0000, the URL of http://www.○ ○.co.jp is read out. Then, the user information access unit 14 allows the information terminal 10 to be accessed to the portal site 20a, 20b (S14). If the URL of http://www.○○.co.jp corresponds to the information terminal 10, the information terminal 10 is made to access to the portal site that has this URL. When the information terminal 10 accesses the portal site 20a, it is possible to peruse the storage contents of the portal site 20a. Further, jump to the site 22a and so forth that are linked to the portal site 20a is capable of being executed in such a way as to perform click and so forth about the link that is indicated on the perusal screen of the storage contents of the portal site 20a (S16). According to the operation, the user of the information terminal 10 is capable of perusing the storage contents of site 22a.

According to the first embodiment, the user information access unit 14 receives the terminal identification information (telephone number and so forth) transmitted from the information terminal 10, followed by allowing the information terminal 10 to be accessed to the portal site 20a corresponding to the terminal identification information on the basis of the storage contents of the correspondence storage section 16.

Accordingly, if there is inherent terminal identification information that the information terminal 10 has, the customer's inherent information such as the user ID of the customer (user) and/or the password are not required for the access to the portal site 20a. Consequently, the access to the portal site 20a becomes easy. Moreover, since, in many cases, one user corresponds to one information terminal 10, there is no interference that the portal site is made to set in every information terminal 10.

Moreover, the portal site 20a stores therein the URL and so forth of the sites 22a, 22b depending on the taste of the customer of the information terminal 10. Accordingly, the customer of the information terminal is capable of accessing to the sites 22a, 22b matched to the user's own taste.

Also, the aforementioned embodiment is capable of being realized in such a way described below. Media reading device of a computer that is provided with a CPU, a hard disk, a media (floppy disk, CD-ROM and so forth) reading device is made to execute about reading of the media that stores program for realizing the aforementioned respective sections, particularly the user information access unit 14, and the correspondence storage section 16 to install to the hard disk. Also, in such a method, the aforementioned function, in particular, the user information access unit 14, and the correspondence storage section 16 can be realized.

### Second Embodiment

In the first embodiment, the portal site is one corresponding to customer information storage means in which information depending on the customer (user) of the information terminal 10 is stored. On the other hand, in the second embodiment, the second embodiment differs from the first embodiment in that user information storage units 24a, 24b correspond to customer information storage means and the user information storage units 24a, 24b are provided with user information transmitter 26 for transmitting information concerning the user.

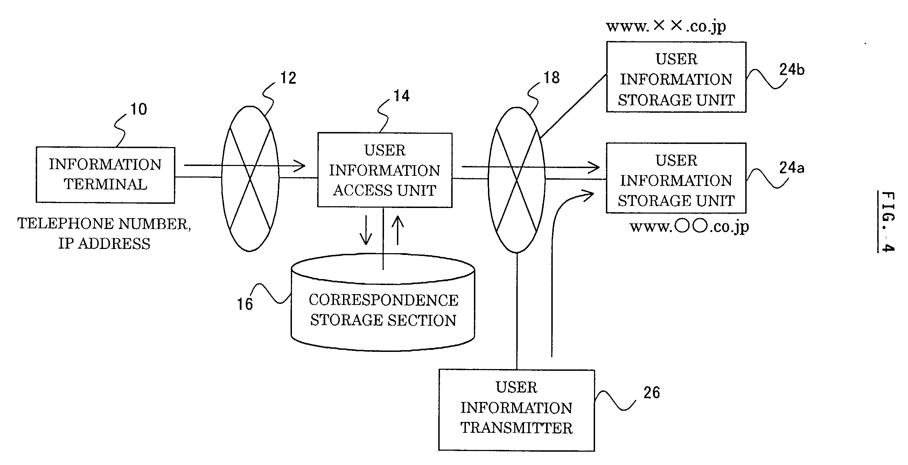

FIG. 4 illustrates a configuration of access device for executing access to information depending on customer according to the second embodiment of the present invention.

The access device for executing access to the information depending on the customer according to the second embodiment is provided with the information terminal 10, the first communication network 12, the user information access unit 14, the correspondence storage section 16, the second communication network 18, the user information storage units 24a, 24b, and the user information transmitter 26. Hereinafter, the same number is added to the same section as that of the first embodiment to omit the explanation.

Since, the information terminal 10, the first communication network 12, the user information access unit 14, and the correspondence storage section 16 are the same as those of the first embodiment, the explanation is eliminated. However, the correspondence storage section 16 stores correspondence between the terminal identification information and the user information storage units 24a, 24b.

The second communication network 18 is the communication network for connecting mutually the user information access unit 14, the user information storage units 24a, 24b, and the user information transmitter 26. The second communication network 18 is, for instance, the internet. Further, the user information storage units 24a, 24b and the user information transmitter 26 are, for instance, the personal computer and so forth connectable to the internet.

The user information storage units 24a, 24b store therein individual information of the customer (user) of the information terminal 10. For instance, if the information terminal 10 is the cellular phone, the user information storage units 24a, 24b store therein service fee of the cellular phone. The user information storage units 24a, 24b permit information provision to individual user, dispatch of information service and so forth for individual. While, the user information storage units 24a, 24b store therein information depending on common attribute of group to which the user belongs or depending on common attribute of the user. For instance, it can be considered that information concerning Tokyo is made to store in the user information storage units 24a, 24b corresponding to the user of the information terminal 10 who lives in Tokyo. Further, it is good that the user information storage units 24a, 24b may be made to store about information depending on common attribute of the information terminal 10 itself or the information terminal 10. For instance, it can be considered that the user information storage units 24a, 24b corresponding to certain kind of the cellular phone (P206 type and so forth) are made to store about information concerning to P206 type from among the information terminals 10.

In recent years, in many cases, the user of the information terminal 10 corresponds to one person per one communication terminal (particularly, cellular phone), if the user information storage units 24a, 24b are made to correspond in every one information terminal 10 depending on the correspondence storage section 16, it is possible to store individual information in every respective users. Furthermore, it is good that the storage contents of the user information storage units 24a, 24b are made to customize depending on common attribute of the group to which the user belongs or common attribute of the user instead of customizing of the storage contents of the user information storage units 24a, 24b in every respective users.

Also, it is no problem that the user information storage units 24a, 24b are already provided, however, it is also good that the user information storage units 24a, 24b may be made to provide temporarily only during the time that the user executes access, namely, the user information storage units 24a, 24b may be made to provide dynamically. For instance, the file that reports data for accessing to the site temporarily is made to prepare only during the time that the user executes access, and the file is made to eliminate after completion of the access. If the user information storage units 24a, 24b are made to provide dynamically, it is possible to prevent damage that another person looks at the storage contents of the user information storage units 24a, 24b. Only two user information storage units 24a, 24b are illustrated in FIG. 4, on the facility of illustration, however, it is enough considered that there are more than three actually. Further, if the user information storage units 24a, 24b made to provide dynamically, even though the URL and the file name of the portal sites are taken to be the complete common URL and the file name in every respective users (user information storage unit becomes one), it also enables the storage contents to be one corresponding to each user.

The user information transmitter 26 transmits information that should be stored in the user information storage units 24a, 24b such as user information and so forth to the user information storage units 24a, 24b. For instance, the telephone charge of the cellular phone in every respective user is made to transmit before the user accesses the user information storage units 24a, 24b (also, immediately before transmission is good). Moreover, only one user information transmitter 26 is illustrated in FIG. 4 on the facility of illustration, however, actually, it can be enough considered that there may be more than three.

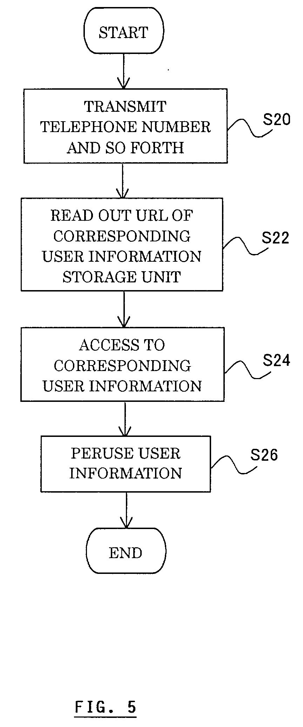

Next, operation of the second embodiment will be described referring to flowchart of FIG. 5. Firstly, the information terminal 10 transmits the telephone number and so forth (S20). The telephone number and so forth that are inherent terminal identification information to the information terminal 10 are sent to the user information access unit 14 through the first communication network 12. The user information access unit 14 reads out the URL of the user information storage units 24a, 24b corresponding to the telephone number from the correspondence storage section 16 (S22). If the telephone number is 00-0000-0000, the URL of http://www.○○.co.jp is read out (referring to FIG. 2). Then, the user information access unit 14 allows the information terminal 10 to be accessed to the corresponding user information storage units 24a, 24b (S24). If the URL of http://www.○○.co.jp corresponds to the information terminal 10, the information terminal 10 is made to access to the user information storage units 24a that has this URL. When the information terminal 10 accesses the user information storage units 24a, it is possible to peruse the storage contents of the user information storage units 24a (S26). For instance, it is possible to peruse telephone charge of the cellular phone in every respective users.

According to the second embodiment, the user information access unit 14 receives the terminal identification information (telephone number and so forth) transmitted from the information terminal, and allows the information terminal 10 to be accessed to the user information storage unit 24a corresponding to the terminal identification information on the basis of storage contents of the correspondence storage section 16.

Accordingly, if there is inherent terminal identification information that the information terminal 10 has, the customer's inherent information such as the user ID of the customer (user) and/or the password are not required for the access to the user information storage unit 24a. Consequently, the access to the user information storage unit 24a becomes easy. Moreover, since, in many cases, one user corresponds to one information terminal 10, there is no interference that the user information storage unit is made to set in every information terminal 10.

Furthermore, in the user information storage unit 24a, the individual information such as telephone charge of the customer (user) of the information terminal 10 is stored, accordingly, it is convenience for the user.

Also, the aforementioned embodiment is capable of being realized in such a way described below. Media reading device of a computer which is provided with a CPU, a hard disk, a media (floppy disk, CD-ROM and so forth) reading device is made to execute about reading of the media that stores program for realizing the aforementioned respective sections, particularly the user information access unit 14, and the correspondence storage section 16 to install to the hard disk. Also, in such a method, the aforementioned function, in particular, the user information access unit 14, and the correspondence storage section 16 can be realized.

### Third Embodiment

The third embodiment differs from the first embodiment in that the first communication network 12 is directly connected to the user information storage unit 30.

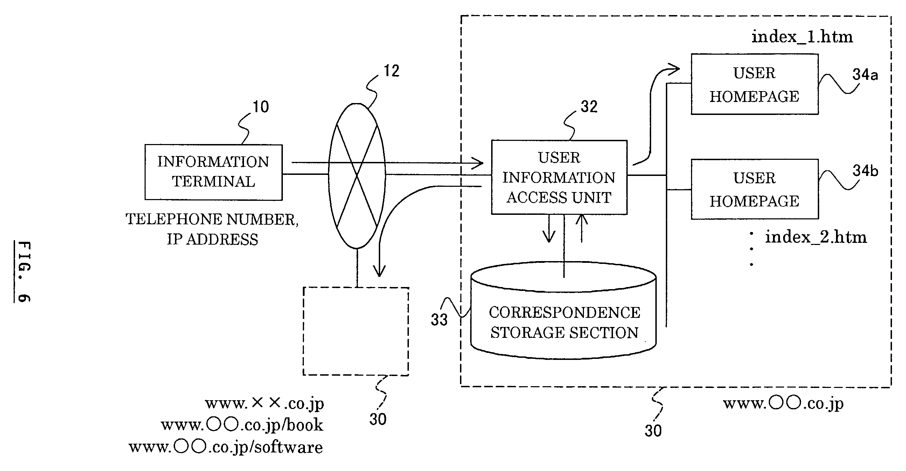

FIG. 6 illustrates a configuration of an access device for executing access to information depending on a customer according to the third embodiment of the present invention.

The access device for executing access to information depending on the customer according to the third embodiment is provided with the information terminal 10, the first communication network 12, and the user information storage unit 30. Hereinafter, the same number is added to the same portion as that of the first embodiment to omit the explanation. Furthermore, since the first communication network 12 is connected directly to the user information storage unit 30, it is unnecessary to provide the user information access unit 14, the correspondence storage section 16, and the second communication network 18. Also, when the information terminal 10 is the cellular phone and the first communication network 12 is the internet, the information terminal 10 is connected to the first communication network 12 through a gate way that is not illustrated.

Since, the information terminal 10 and the first communication network 12 are the same as that of the first embodiment, the explanation is omitted.

The user information storage unit 30 has a user information access section 32, a correspondence information storage section 33, and user homepages 34a, 34b. The user information access section 32, the correspondence information storage section 33, and the user homepages 34a, 34b are in one piece. Namely, the user information access section 32, the correspondence information storage section 33, and the user homepages 34a, 34b are realized on one computer (personal computer, work station and so forth) and the storage medium (hard disk and so forth) connected thereto. Usually, there are a plurality of the user information storage units 30. Furthermore, in the example illustrated in FIG. 6, the user information access section 32, the correspondence information storage section 33, and the user homepages 34a, 34b are in one piece, however, it is unnecessary that the user information access section 32, the correspondence information storage section 33, and the user homepages 34a, 34b are in one piece. It is no problem that each the user information access section 32, the correspondence information storage section 33, or the user homepages 34a, 34b are realized by separated computer.

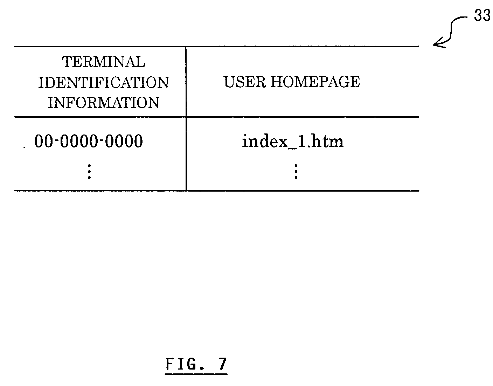

The user information access section 32 allows the information terminal 10 to be accessed to the user homepages 34a, 34b depending on the customer of the information terminal or another user information storage unit 30 on the basis of the terminal identification information of the information terminal 10 that is access of arrival. The correspondence information storage section 33 stores correspondence between the terminal identification information and the user homepages 34a, 34b or correspondence to another user information storage section 30. For instance, the terminal identification information is the telephone number, object that indicates the user homepages 34a, 34b or another user information storage unit 30 is the URL (for instance, www.××.co.jp, www.○ ○.co.jp/book, www.○○.co.jp/software and so forth), file name and so forth. Furthermore, it is good that the URL of another user information storage unit 30 is subordinate position of the URL of the user information storage unit 30 (www. ○○.co.jp/book, www.○○.co.jp/software and so forth), while it is good that the URL of another user information storage unit 30 is not subordinate position of the URL of the user information storage unit 30. FIG. 7 illustrates one example of storage contents of the correspondence information storage section 33. The correspondence information storage section 33 stores therein, for instance, the telephone number as terminal identification information of the information terminal 10, and the file name as object which indicates the user homepages 34a, 34b. For instance, the user homepage 34a whose file name is index_1.htm corresponds to the information terminal 10 whose telephone number is 00-0000-0000. The user homepages 34a, 34b store individual information of the customer (user) of the information terminal 10. While, the user homepages 34a, 34b store therein information of the group to which the user belongs or information depending on common attribute of the user. For instance, it can be considered that information concerning Tokyo is made to store in the user homepages 34a, 34b corresponding to the user of the information terminal 10 who lives in Tokyo. Further, it is good that the user homepages 34a, 34b may be made to store about information depending on common attribute of the information terminal 10 itself or the information terminal 10. For instance, it can be considered that the user homepages 34a, 34b corresponding to certain kind of the cellular phone (P206 type and so forth) are made to store about information concerning to P206 type from among the information terminals 10.

Also, it is no problem that the user homepages 34a, 34b are already provided, however, it is also good that the user homepages 34a, 34b may be made to provide temporarily only during the time that the user executes access, namely, the user homepages 34a, 34b may be made to provide dynamically. If the user homepages 34a, 34b are made to provide dynamically, it is possible to prevent damage that another person looks at the storage contents of the user homepages 34a, 34b. Only two user homepages 34a, 34b are illustrated in FIG. 6, on the facility of illustration, however, it can be enough considered that there are more than three.

Here, supposition example of the information terminal 10 will be described. For instance, it is supposed that the cellular phone as the information terminal 10 is made to carry by the person in charge of business of the enterprise, the user information storage unit 30 is taken to be the http server of the enterprise, and the user homepages 34a, 34b or the user homepages 34a, 34b in another user information storage unit 30 are taken to be information that is specialized in every respective person in charge of business who carries the cellular phone. In this case, it is preferable that even though there is access to the user information storage unit 30 from the information terminal 10 with the telephone number other than the telephone number of the cellular phone that respective persons in charge of business carry, the user information access section 32 prohibits such access in such a way as not to access the user homepages 34a, 34b or another user information storage unit 30. This disposal is one in which the third party can not look at the enterprise information. Furthermore, such decision whether prohibition of the access is made to execute is capable of being determined whether the telephone number of the cellular phone of access of arrival is the telephone number being not stored in the correspondence information storage section 33.

Also, it is supposed that the user information storage unit 30 is taken to be the http server for advertisement, and the user homepages 34a, 34b are taken to be advertisement specialized in every user that is access of arrival. In this case, the URL of the http server of the enterprise is laid open to the public, or the URL it self of the http server of the enterprise is advertised. For instance, the URL itself of the http server of the enterprise is made to register to the search engine. This disposal is one in which the advertisement is made to execute effectively.

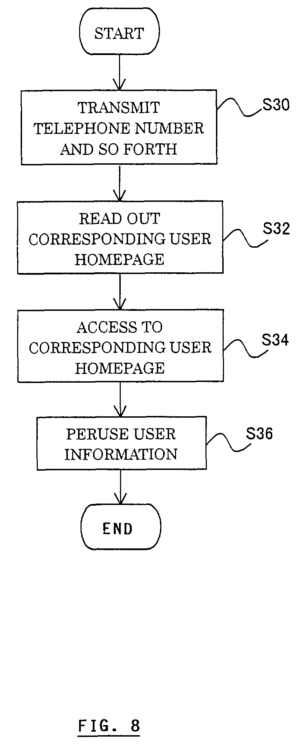

Next, operation of the third embodiment will be described referring to flowchart of FIG. 8. Firstly, the information terminal 10 transmits the telephone number and so forth (S30). When the information terminal 10 accesses the user information storage unit 30, the user information access section 32 reads out the user homepages 34a, 34b or another user information storage unit 30 corresponding to the terminal identification information inherent to the information terminal 10 from the correspondence information storage section 33 (S32). If the telephone number is 00-0000-0000, file name index_1.htm is read out (referring to FIG. 7). Then, the user information access section 32 allows the information terminal 10 to be accessed to the user homepages 34a, 34b or another user information storage unit 30 corresponding to the terminal identification information inherent to the information terminal 10 (S34). For instance, if the telephone number inherent to the information terminal 10 corresponds to the user homepage 34a, the information terminal 10 is made to access to the user homepage 34a. Further, the information terminal 10 peruses information inherent to the user (S36).

According to the third embodiment, the user information storage unit 30 receives the terminal identification information (telephone number and so forth) transmitted from the information terminal 10, and allows the information terminal 10 to be accessed to the user homepages 34a, 34b corresponding to the terminal identification information on the basis of the storage contents of the correspondence information storage section 33.

Accordingly, if there is inherent terminal identification information that the information terminal 10 has, the customer's inherent information such as the user ID of the customer (user) and/or the password are not required for the access to the user homepages 34a, 34b. Consequently, the access to the user homepages 34a, 34b becomes easy. Moreover, since, in many cases, one user corresponds to one information terminal 10, there is no interference that the user homepages 34a, 34b are made to set in every information terminal 10.

Furthermore, in the user homepages 34a, 34b, the individual information such as telephone charge of the customer (user) of the information terminal 10 is stored, accordingly, it is convenience for the user.

Also, the aforementioned embodiment is capable of being realized in such a way described below. Media reading device of a computer that is provided with a CPU, a hard disk, a media (floppy disk, CD-ROM and so forth) reading device is made to execute about reading of the media that stores program for realizing the aforementioned respective sections, particularly the user information storage unit 30 to install to the hard disk. Also, in such a method, the aforementioned function, in particular, the user information storage unit 30 can be realized.

According to the present invention, customer's information access means receive terminal identification information transmitted from the information terminal, and allow the information terminal to be accessed to customer's information storage means corresponding to the terminal identification information on the basis of storage contents of correspondence storage means.

Accordingly, if there is inherent terminal identification information that the information terminal has, the information inherent to the customer such as customer's user ID or password is not required to access to the customer's information storage means. Consequently, the access to the customer's information storage means becomes easy.

Furthermore, the customer's information storage means store therein information depending on the customer of the information terminal. Accordingly, the customer of the information terminal is capable of accessing sites and so forth matched to own taste.

## Claims

1. An access device for executing access to information depending on a customer comprising:
an information terminal which has inherent terminal identification information and which executes transmission of said terminal identification information;
a customer's information storage means which stores therein information depending on the customer of said information terminal;
a correspondence storage means for storing correspondence between said terminal identification information and said customer's information storage means; and
a customer's information access means which receive said terminal identification information transmitted from said information terminal, and which allows said information terminal to be accessed to said customer's information storage means corresponding to said terminal identification information on the basis of storage contents of said correspondence storage means.

2. An access device for executing access to information depending on a customer, in which said access device has inherent terminal identification information and allows an information terminal for executing transmission of said terminal identification information to be accessed to a customer's information storage means which store therein information depending on the customer concerned with said information terminal, comprising:
a correspondence storage means for storing correspondence between said terminal identification information and said customer's information storage means; and
a customer's information access means which receive said terminal identification information transmitted from said information terminal, and which allow said information terminal to be accessed to said customer's information storage means corresponding to said terminal identification information on the basis of storage contents of said correspondence storage means.

3. The access device for executing access to information depending on the customer according to claim 1 or claim 2, wherein said customer's information storage means store therein information depending on said information terminal.

4. The access device for executing access to information depending on the customer described in any one of claim 1 to claim 3, wherein said customer's information storage means store therein data for accessing device that indicates information.

5. The access device for executing access to information depending on the customer described in any one of claim 1 to claim 3, wherein there is provided customer's information transmission means for transmitting information corresponding to said customer or information depending on said information terminal to said customer's information storage means.

6. The access device for executing access to information depending on the customer described in any one of claim 1 to claim 5, wherein an access method for accessing to said customer's information access means is laid open.

7. The access device for executing access to information depending on the customer described in any one of claim 1 to claim 5, wherein said customer's information access means accept only access from said specified information terminal.

8. The access device for executing access to information depending on the customer described in any one of claim 1 to claim 7, wherein said customer's information storage means exist temporarily.

9. The access device for executing access to information depending on the customer described in any one of claim 1 to claim 8, wherein said information terminal transmits said terminal identification information to said customer's information access means after predetermined operations.

10. An access method for executing access to information depending on a customer and for allowing an information terminal, which has inherent terminal identification information and which executes transmission of said terminal identification information, to be accessed to a customer's information storage means which stores therein information depending on the customer of said information terminal comprising:
a correspondence storage step for storing correspondence between said terminal identification information and said customer's information storage means; and
a customer's information access step which receive said terminal identification information transmitted from said information terminal, and which allows said information terminal to be accessed to said customer's information storage means corresponding to said terminal identification information on the basis of storage contents of said correspondence storage step.

11. A computer-readable medium having a program of instructions for execution by the computer to perform an access process for executing access to information depending on a customer and for allowing an information terminal, which has inherent terminal identification information and which executes transmission of said terminal identification information, to be accessed to a customer's information storage means which stores therein information depending on the customer of said information terminal comprising:
a correspondence storage processing for storing correspondence between said terminal identification information and said customer's information storage means; and
a customer's information access processing which receive said terminal identification information transmitted from said information terminal, and which allows said information terminal to be accessed to said customer's information storage means corresponding to said terminal identification information on the basis of storage contents of said correspondence storage processing.
